# EUROPEAN PATENT SPECIFICATION

(11) **EP 3 532 526 B1**
(45) Date of publication and mention of the grant of the patent: **12.08.2020**
(21) Application number: 17794695.1
(22) Date of filing: 24.10.2017
(51) Int. Cl.: C08G 59/40, C08J 5/24, C08G 59/50, C08G 59/56, C08G 59/24

(54) **RAPID CURING EPOXY-RESIN COMPOSITION FOR FIBER-MATRIX SEMIFINISHED PRODUCTS**
SCHNELLHÄRTENDE EPOXIDHARZZUSAMMENSETZUNG FÜR FASERMATRIX-HALBZEUGE
COMPOSITION DE RÉSINE ÉPOXY À DURCISSEMENT RAPIDE POUR PRODUITS SEMI-FINIS À MATRICE FIBREUSE

(30) Priority: 28.10.2016 EP 16196273
(43) Date of publication of application: 04.09.2019
(73) Proprietor: Reichhold AS, 1630 Gamle Fredrikstad (NO)
(72) Inventor: GEHRINGER, Lionel, 67056 Ludwigshafen (DE); YU, Miran, 67056 Ludwigshafen (DE); HENNINGSEN, Michael, 67056 Ludwigshafen (DE); ZWECKER, Joachim, 67056 Ludwigshafen (DE)
(74) Representative: Modiano, Micaela Nadia
(86) International application number: PCT/EP2017/077082
(87) International publication number: WO 2018/077836

(56) References cited:
- WO-A1-2014/184012
- JP-A- H09 241 603

## Description

The present invention relates to an epoxy-resin composition comprising a resin component comprising at least one epoxy resin and a hardener component comprising at least one aminoalkylimidazole compound, at least one diazabicycloalkylen compound and at least one latent hardener, where the epoxy-resin composition is suitable as thermoset matrix for producing fiber-matrix semifinished product (resin mat (sheet molding compound (SMC)) or unshaped fiber-matrix semifinished product (bulk molding compound (BMC))), in particular SMC, without modification of the conventional processes for producing and using, by way of example, polyester-based fiber-matrix semifinished product. In said epoxy-resin composition, the amount of the aminoalkylimidazole compounds used is in the range from 0.007 to 0.025 mol per mole of epoxy groups of the entire composition. Another feature of said epoxy-resin composition is that the entire amount of primary aliphatic amine groups does not exceed a proportion of 0.09 mol per mole of epoxy groups of the entire composition. The invention also relates to a fiber-matrix-semifinished-product composition, in particular an SMC composition, comprising the epoxy-resin composition mentioned and, suspended therein, short reinforcement fibers with an average length of from 0.3 to 5.0 cm. The fiber-matrix-semifinished-product composition can be produced via mixing of the constituents, whereupon the composition thickens (precuring). The resultant thickened product (semisolid (precured) fiber-matrix semifinished product, in particular semisolid (precured) SMC can be stored for some days or weeks. It can then be hardened under suitable curing conditions to give the cured fiber-matrix semifinished product (in particular cured SMC). The invention also relates to semisolid fiber-matrix semifinished product, in particular semisolid (precured) SMC and cured fiber-matrix semifinished product, in particular cured SMC.

The use of SMC-based molding processes has expanded greatly during the course of recent years, in particular in the automobile industry (shock absorbers, trunk lids, etc.) and also in the electrical industry (cast parts, low-voltage applications, etc.). The resins most frequently used in this technology are unsaturated polyester resins. These resins are crosslinked by use of a reactive monomer, usually a vinyl monomer, and in particular styrene monomer.

In the conventional process, a solution made of unsaturated, carboxy-terminated polyester in the vinyl monomer (e.g. styrene) is mixed with a peroxide or another initiator, a thickener, such as magnesium oxide, and a filler, such as calcium carbonate or alumina. This liquid mixture is then mixed by way of example with sections of glass fiber or of other fiber between two foils (by way of example made of polyethylene or polyamide), and squeeze rollers are used here to remove air bubbles. The viscosity rises over a few days from an initial value that is usually from 0.01 to 100 Pa*sec to a value that is usually in the range from 30 000 to 150 000 Pa*sec. The viscosity increase is brought about via the reaction of the terminal carboxy groups of the polyester with the thickener. In the case of magnesium oxide as thickener, polymeric magnesium carbonates are formed. Once the thickener has been consumed, the viscosity reaches a plateau.

This semisolid polyester-based SMC composition then has a non-tacky, leather-like consistency which is suitable for insertion into a compression mold. The viscosity of the thickened product should remain approximately constant over a period that is preferably at least three months, which is the available processing time for said polyester-based SMC composition.

If the viscosity is too low, liquid resin escapes from the mold during the shaping process. If, in contrast, the viscosity is too high, the SMC becomes board-like, and is therefore difficult to insert into the mold and may lack the flowability necessary for complete filling of the mold. The thickened polyester-based SMC composition is then cured via polymerization of the unsaturated bonds initiated by the peroxides, typically within from 2 to 10 min at temperatures of from 120 to 180°C.

A disadvantage of the known polyester-based SMC compositions described above is the use of styrene as reactive diluent. Styrene can escape from the aged thickened polyester-based SMC compositions and therefore represents a health risk, especially since it is now classified as a substance that is relatively hazardous to health. It has previously been proposed that styrene be replaced by isocyanates, but these are only slightly less hazardous to health than styrene, and they are therefore not an ideal solution to the problem.

Another problem with known polyester-based SMC is that the parts produced therefrom are very susceptible to warpage. In order to counteract this, thermoplastic additives are usually added (e.g. PS or PVA). However, these additives have a disadvantageous effect on viscosity and mechanical properties.

WO 98/22527 A1 describes epoxy-resin-based SMC compositions comprising an epoxy resin, a carboxylic acid or an anhydride thereof as thickener, a latent hardener, and optionally a catalyst for the curing reaction. The compositions described in that document have the disadvantage of comparatively long maturing time, in particular for further processing where the composition is compressed and hardened in a mold.

GB 2462996 A1 discloses epoxy-resin matrices for producing prepregs which include an epoxy resin, another resin material, an amine as thickener (B-staging), a latent hardener, and a catalyst or accelerator for the curing process. The composition described in that document has the disadvantage of the comparatively short time, from mixing of the constituents, during which the composition retains a consistency that is adequately flexible to permit easy handling.

CN 102337007 B discloses epoxy-resin-based SMC based on alkaline earth metal oxides, alkaline earth metal hydroxides, isocyanate compounds, or alcohols as thickeners.

ES 2303769 B discloses compositions made of epoxy resin, chain extender, latent hardener, curing accelerator, and additive, in particular for producing prepregs, where particular chain extenders mentioned are amines, amine adducts, polycarboxylic acids, polycarboxylic anhydrides, disulfides, thiols, polythiols, polysulfides, polyphenols, polyamines, and polyamides.

WO 2014/184012 A1 describes epoxy-resin-based SMC compositions comprising an epoxy resin, an imidazole compound (e.g. an aminoalkylimidazole) as thickener, a latent hardener, and optionally a catalyst for the curing reaction. The use of a diazabicycloalkylen compound as curing accelerator is not described.

It would be desirable to provide an epoxy-resin-based SMC composition or epoxy-resin-based BMC composition which, as rapidly as possible after production, achieves an adequately long available processing time (molding window) within which the viscosity under curing conditions (for example curing temperature of 140°C) becomes adequately low (adequate flowability for complete filling of the mold) but at the same time remains sufficiently high to prevent escape of the epoxy-resin matrix from the mold during the shaping process (in particular during processing under pressure, in particular a compression process), with no separation of reinforcement fibers and matrix. At the same time, such composition should allow for a rapid curing. A further intention is that the epoxy-resin-based SMC composition or epoxy-resin-based BMC composition retain an adequately flexible consistency for as long as possible, in order to facilitate handling (for example storage of the SMC in the form of rolls; insertion of the SMC into the compression mold).

Accordingly, the present invention provides an epoxy-resin composition comprising a resin component (A) comprising at least one epoxy resin (A1) and a hardener component (B) comprising at least one aminoalkylimidazole compound (B1), at least one latent hardener (B2), and at least one diazabicycloalkylen compound of the general formula I (B3) 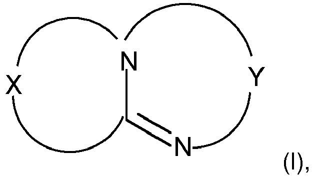 where X and Y are respectively mutually independently an alkylen group, preferably having from 3 to 5 carbon atoms,
where the amount of the aminoalkylimidazole compounds (B1) used is in the range from 0.007 to 0.025 mol per mole of epoxy groups of the entire composition, and
where the total amount of primary aliphatic amine groups of the aminoalkylimidazole compounds (B1) and any further primary amines optionally comprised does not exceed a proportion of 0.09 mol per mole of epoxy groups of the entire composition.

The invention also provides an epoxy-resin composition (herein also called fiber-matrix-semifinished-product composition) comprising an epoxy-resin composition (matrix component) comprising a resin component (A) which comprises at least one epoxy resin (A1), and a hardener component (B) which comprises at least one aminoalkylimidazole compound (B1), at least one latent hardener (B2), and at least one diazabicycloalkylen compound (B3), and comprising short reinforcement fibers (C) with an average length of from 0.3 to 5.0 cm (fiber component) suspended in the epoxy-resin composition (matrix component), where the amount of the aminoalkylimidazole compounds (B1) used is in the range from 0.007 to 0.025 mol per mole of epoxy groups of the entire composition, and where the entire amount of primary aliphatic amine groups of the aminoalkylimidazole compounds (B1) and any further primary amines optionally comprised does not exceed a proportion of 0.09 mol per mole of epoxy groups of the entire composition. For the purposes of the present invention, fiber-matrix-semifinished-product compositions are SMC compositions or BMC compositions, preferably SMC compositions, where the short reinforcement fibers (C) in the case of SMC compositions preferably have an average length of from 1.2 to 5.0 cm and in the case of BMC compositions preferably have an average length of from 0.3 to 2.5 cm. The proportion of the short reinforcement fibers (C) in the fiber-matrix-semifinished-product composition of the invention is usually at least 10% by weight, based on the entire fiber-matrix-semifinished-product composition.

Properties and nomenclature of SMC and BMC are controlled by the standard DIN EN 14598.

The epoxy resin (A1) of this invention usually has from 2 to 10, preferably from 2 to 6, very particularly preferably from 2 to 4, and in particular 2, epoxy groups. The epoxy groups in particular involve the glycidyl ether groups produced during the reaction of alcohol groups with epichlorohydrin. The epoxy resins can involve low-molecular-weight compounds which generally have an average molar mass (Mn) smaller than 1000 g/mol, or higher-molecular-weight compounds (polymers). These polymeric epoxy resins preferably have a degree of oligomerization of from 2 to 25, particularly preferably from 2 to 10, units. They can involve (cyclo)aliphatic compounds, or compounds having aromatic groups. In particular, the epoxy resins involve compounds having two aromatic or aliphatic 6-membered rings, or oligomers of these. Industrially important materials are epoxy resins obtainable via reaction of epichlorohydrin with compounds having at least two reactive H atoms, in particular with polyols. Particularly important materials are epoxy resins obtainable via reaction of epichlorohydrin with compounds comprising at least two, preferably two, hydroxy groups, and comprising two aromatic or aliphatic 6-membered rings. Examples that may be mentioned of these epoxy resins (A1) of the invention are in particular bisphenol A and bisphenol F, and also hydrogenated bisphenol A and bisphenol F - the corresponding epoxy resins being the diglycidyl ethers of bisphenol A or bisphenol F, or of hydrogenated bisphenol A or bisphenol F. It is usual to use bisphenol A diglycidyl ether (DGEBA) as epoxy resin (A1) in this invention. In the invention, the expressions bisphenol A diglycidyl ether (DGEBA) and bisphenol F diglycidyl ether (DGEBF) mean not only the corresponding monomers but also the corresponding oligomeric variants. The epoxy resin (A1) of the invention is preferably a diglycidyl ether of monomeric or oligomeric diol. The diol here is preferably one selected from the group consisting of bisphenol A or bisphenol F, or of hydrogenated bisphenol A or bisphenol F, and the degree of oligomerization of the oligomeric diol is preferably from 2 to 25, particularly preferably from 2 to 10, units. Other suitable epoxy resins (A1) of this invention are tetraglycidylmethylenedianiline (TGMDA) and triglycidylaminophenol, and mixtures thereof. It is also possible to use reaction products of epichlorohydrin with other phenols, e.g. with cresols or with phenol-aldehyde adducts, such as phenol-formaldehyde resins, in particular novolaks. Epoxy resins which do not derive from epichlorohydrin are also suitable. Examples of those that can be used are epoxy resins which comprise epoxy groups via reaction with glycidyl (meth)acrylate. In the invention it is preferable that epoxy resins (A1) or mixtures thereof used are liquid at room temperature (25°C), in particular with a viscosity in the range from 8000 to 12 000 Pa*sec. The epoxy equivalent weight (EEW) gives the average mass of the epoxy resin in g per mole of epoxy group. It is preferable that the epoxy resin (A1) of the invention have an EEW in the range from 150 to 250, in particular from 170 to 200.

In one particular embodiment of the invention, a mixture of various epoxy resins is used as epoxy resin (A1). A preferred mixture is the combination of DGEBA and epoxy-novolak resins, preferably in a ratio by weight of from 50:80 to 50:20.

In one particular embodiment of the invention, an individual epoxy resin, such as DGEBA, is used as epoxy resin (A1).

It is preferable that the epoxy-resin composition (matrix component without reinforcement fibers) of the invention is composed of at least 30% by weight, in particular at least 40% by weight, of epoxy resin (A1).

In one particular embodiment of the invention, the epoxy-resin composition (matrix component without reinforcement fibers or the fiber-matrix-semifinished-product composition) comprises, as further constituent of the resin component (A) alongside the epoxy resin (A1), a reactive diluent (A2). For the purposes of the invention, reactive diluents (A2) are compounds which reduce the initial viscosity of the epoxy-resin composition or of the fiber-matrix-semifinished-product composition produced therefrom and during the course of curing of said composition enter into chemical bonding with the developing network made of epoxy resin and hardener. For the purposes of this invention, preferred reactive diluents (A2) are low-molecular-weight organic, preferably aliphatic compounds having one or more epoxy groups. Reactive diluents (A2) of the invention can also be cyclic carbonates, in particular cyclic carbonates having from 1 to 10 carbon atoms, for example ethylene carbonate, propylene carbonate, glycerol carbonate, butylene carbonate, or vinylene carbonate. Preferred reactive diluents (A2) of the invention are those selected from the group consisting of ethylene carbonate, vinylene carbonate, propylene carbonate, glycerol carbonate, 1,4-butanediol bisglycidyl ether, 1,6-hexanediol bisglycidyl ether, glycidyl neodecanoate, glycidyl versatate, 2-ethylhexyl glycidyl ether, neopentyl glycol diglycidyl ether, p-tert-butyl glycidyl ether, butyl glycidyl ether, C8-C10-alkyl glycidyl ether, C12-C14-alkyl glycidyl ether, nonylphenyl glycidyl ether, p-tert-butylphenyl glycidyl ether, phenyl glycidyl ether, o-cresyl glycidyl ether, polyoxypropylene glycol diglycidyl ether, trimethylolpropane triglycidyl ether, glycerol triglycidyl ether, triglycidylpara-aminophenol, divinylbenzyl dioxide, and dicyclopentadiene diepoxide. Particular preference is given to those selected from the group consisting of 1,4-butanediol bisglycidyl ether, 1,6-hexanediol bisglycidyl ether, 2-ethylhexyl glycidyl ether, C8-C10-alkyl glycidyl ether, C12-C14-alkyl glycidyl ether, neopentyl glycol diglycidyl ether, p-tert-butyl glycidyl ether, butyl glycidyl ether, nonylphenyl glycidyl ether, p-tert-butylphenyl glycidyl ether, phenyl glycidyl ether, o-cresyl glycidyl ether, trimethylolpropane triglycidyl ether, glycerol triglycidyl ether, divinylbenzyl dioxide, and dicyclopentadiene diepoxide. They are in particular those selected from the group consisting of 1,4-butanediol bisglycidyl ether, C8-C10-alkyl monoglycidyl ether, C12-C14-alkyl monoglycidyl ether, 1,6-hexanediol bisglycidyl ether, neopentyl glycol diglycidyl ether, trimethylolpropane triglycidyl ether, glycerol triglycidyl ether, divinylbenzene dioxide, and dicyclopentadiene diepoxide.

The reactive diluents (A2) of the invention preferably make up a proportion of up to 30% by weight, particularly preferably up to 20% by weight, in particular from 1 to 10% by weight, based on the entire resin component (A) (epoxy resin (A1) and any reactive diluents (A2) used) of the epoxy-resin composition.

The aminoalkylimidazole compound (B1) is preferably an aminoalkylimidazole compound of the general formula II 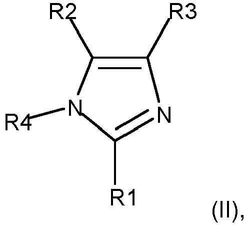 where
R1 is a hydrogen atom, an alkyl group, an aryl group, or an arylalkyl group,
R2 and R3 are respectively mutually independently a hydrogen atom or an alkyl group, and
R4 is an aminoalkyl group.

It is preferable that R1 of the aminoalkylimidazole compound of the general formula II is a hydrogen atom, an alkyl group having from 1 to 10 carbon atoms, an aryl group having from 3 to 16 carbon atoms, or an arylalkyl group having from 4 to 20 carbon atoms. It is particularly preferable that R1 is a hydrogen atom, an alkyl group having from 1 to 4 carbon atoms, an aryl group having from 3 to 7 carbon atoms, or an arylalkyl group having from 4 to 10 carbon atoms. It is very particularly preferable that R1 is a hydrogen atom or an alkyl group having from 1 to 4 carbon atoms.

It is preferable that R2 and R3 of the aminoalkylimidazole compound of the general formula II are respectively mutually independently a hydrogen atom or an alkyl group having from 1 to 4 carbon atoms.

It is preferable that R4 of the aminoalkylimidazole compound of the general formula II is an aminoalkyl group, having from 2 to 4 carbon atoms and having a primary amino group. Examples of these aminoalkylimidazoles are 1-(2-aminoethyl)-2-methylimidazole, 1-(2-aminoethyl)-2-ethylimidazole, 1-(3-aminopropyl)imidazole, 1-(3-aminopropyl)-2-methylimidazole, 1-(3-aminopropyl)-2-ethylimidazole, 1-(3-aminopropyl)-2-phenylimidazole, 1-(3-aminopropyl)-2-heptadecylimidazole, 1-(3-aminopropyl)-2,4-dimethylimidazole, 1-(3-aminopropyl)-2,5-dimethylimidazole, 1-(3-aminopropyl)-2-ethyl-4-methylimidazole, 1-(3-aminopropyl)-2-ethyl-5-methylimidazole, 1-(3-aminopropyl)-4-methyl-2-undecylimidazole, and 1-(3-aminopropyl)-5-methyl-2-undecylimidazole. Among these compounds, particular preference is given to 1-(3-aminopropyl)imidazole (API).

The diazabicycloalkylen compound of the general formula I (B3) is preferably 7,8-diazabicyclo[5,4,0]undec-7-ene (DBU) or 1,5-diazabicyclo[4,3,0]non-5-ene (DBN) or a mixture thereof. In one particular embodiment of the invention, the diazabicycloalkylen compound of the general formula I (B3) is 7,8-diazabicyclo[5,4,0]undec-7-ene (DBU). In another particular embodiment of the invention, the diazabicycloalkylen compound of the general formula I (B3) is 1,5-diazabicyclo[4,3,0]non-5-ene (DBN).

For the purposes of the invention, alkyl groups have from 1 to 20 carbon atoms. They can be linear, branched, or cyclic. They can be saturated or (poly)unsaturated. They are preferably saturated. They have no substituents having heteroatoms. Heteroatoms are all atoms other than C and H atoms.

For the purposes of the invention, alkylen groups have from 1 to 20 carbon atoms. They can be linear or branched. They are preferably linear. They can be saturated or (poly)unsaturated. They are preferably saturated. They have no substituents having heteroatoms. Heteroatoms are all atoms other than C and H atoms.

For the purposes of the invention, aryl groups have from 3 to 20 carbon atoms. The aromatic ring system can comprise 1 or 2 heteroatoms, preferably nitrogen and/or oxygen, per ring. They have no substituents having heteroatoms. Heteroatoms are all atoms other than C and H atoms.

For the purposes of the invention, primary aliphatic amine groups are primary amine groups which are bound to a carbon atom which is not part of an aromatic or tautomeric system.

In the epoxy-resin compositions of the invention (matrix component without reinforcement fibers or fiber-matrix-semifinished-product composition) the total amount of the one or more aminoalkylimidazole compounds (B1) used is in the range from 0.007 to 0.025 mol per mole of epoxy groups of the entire composition, preferably in the range from 0.010 to 0.020 mol per mole of epoxy groups of the entire composition.

In the epoxy-resin compositions of the invention (matrix component without reinforcement fibers or fiber-matrix-semifinished-product composition) the total amount of the one or more diazabicycloalkylen compounds of the general formula I (B3) used is preferably in the range from 0.5 to 3.0 % by weight, in particular preferably in the range from 0.5 to 2.0 % by weight, based on the amount of epoxy resin (A1).

Latent hardener (B2) used in the epoxy-resin composition of the invention can comprise any compound or mixture thereof that is known for this purpose, and that under ambient conditions (temperature of from 10 to 50°C at atmospheric pressure) does not react significantly with the epoxy resin used, but which at elevated temperature (for example above 80°C, in particular above 120°C) reacts to give crosslinking with the epoxy resin used. A reaction that is not significant between the latent hardener and the epoxy resin is a reaction which within 24 h under ambient conditions leads at most to doubling of the viscosity of the epoxy-resin composition (for example no, or less than two-fold, increase of the viscosity at room temperature (25°C) within 24 h). Hardeners which react with the epoxy resin even at relatively low temperatures lead to products (semisolid fiber-matrix semifinished product (semisolid SMC or BMC)) with inadequate shelf life. Desirable shelf lives are at least 5 days, preferably at least 2 weeks, in particular at least 1 month, very particularly preferably at least 2 months, at room temperature. In this context shelf life is the period that begins with production and within which the semisolid fiber-matrix semifinished product can still be used advantageously for the shaping (for example in a compression process) of cured SMC and, respectively, BMC.

For the purposes of the invention, suitable latent hardeners (B2) are by way of example quaternary phosphonium compounds, and also boron trifluoride-amine adducts, in particular corresponding adducts with tertiary aliphatic amines. Dicyandiamide (DICY), in particular in finely ground form, is particularly suitable as latent hardener (B2). It leads to curing of the epoxy resin system at elevated temperature once the material has melted, probably by virtue of reactive cleavage products. Preferred latent hardener (B2) of the invention is DICY.

The amount used of latent hardener (B2) in the epoxy-resin compositions of the invention (matrix component without reinforcement fibers or fiber-matrix-semifinished-product composition) is that sufficient for the effective curing of the semisolid fiber-matrix semifinished product, for example of the semisolid SMC. Effective curing is present by way of example when at least 90%, preferably at least 95%, in particular at least 98%, of the epoxy groups still remaining in the semisolid fiber-matrix semifinished product after the thickening process are reacted. It is usual to use from 0.4 to 1.2, preferably from 0.6 to 1.1, particularly preferably from 0.8 to 1.0, equivalents of the latent hardener or of the mixture of latent hardeners, based on the epoxy equivalents remaining after the thickening process. In the case of DICY as latent hardener (B2), it is usual to use from 0.05 to 0.30 mol of DICY, preferably from 0.10 to 0.25 mol of DICY, based on the number of (originally used) moles of epoxy group of the curable composition.

The aminoalkylimidazole compound (B1) brings about the thickening of the epoxy-resin composition of the invention (matrix component without reinforcement fibers or fiber-matrix-semifinished-product composition) to give the semisolid fiber-matrix semifinished product, and at the same time it can act as catalyst for the curing brought about via the latent hardener (B2), in particular if DICY is used as latent hardener (B2).

The hardener component (B) of the epoxy-resin compositions of the invention (matrix component without reinforcement fibers or fiber-matrix-semifinished-product composition) can also comprise, alongside the aminoalkylimidazole compound (B1), the latent hardener (B2), and the diazabicycloalkylen compound (B3), other constituents (optional constituents of the hardener component (B)) which can react with the epoxy groups of the resin component or can initiate, accelerate, or catalyze reactions of said groups.

These optional constituents of the hardener component (B) involve by way of example amines, in particular primary amines. It is preferable to use, as optional constituent of the hardener component (B), monoamines or polyamines having one or more, in particular having one or two, primary amino groups. Examples of amines which can be used as optional constituent of the hardener component (B) are dimethyldicycan (DMDC), isophoronediamine (IPDA), diethylenetriamine (DETA), triethylenetetramine (TETA), 1,3-bis(aminomethyl)cyclohexane (1,3-BAC), bis(p-aminocyclohexyl)methane (PACM), methylenedianiline (for example 4,4'-methylenedianiline), polyetheramines, such as polyetheramine D230, polyaminoamides such as Versamid 140, diaminodiphenylmethane (DDM), diaminodiphenyl sulfone (DDS), 2,4-toluenediamine, 2,6-toluenediamine, 2,4-diamino-1-methylcyclohexane, 2,6-diamino-1-methylcyclohexane, 1,2-diaminocyclohexane, 1,2-diaminobenzene, 1,3-diaminobenzene, 1,4-diaminobenzene, diaminodiphenyl oxide, 3,3',5,5'-tetramethyl-4,4'-diaminobiphenyl, 3,3'-dimethyl-4,4'-diaminobiphenyl, 1,12-diaminododecane, 1,10-diaminodecane, 1,2-propanediamine, 1,3-propanediamine, 2,2'-oxybis(ethylamine), 3,3'-dimethyl-4,4'-diaminodicyclohexylmethane, 4-ethyl-4-methylamino-1-octylamine, ethylenediamine, hexamethylenediamine, a mixture of 4-methylcyclohexane-1,3-diamines and 2-methylcyclohexane-1,3-diamines (MDACH), menthenediamine, xylylenediamine, N-aminoethylpiperazine, neopentanediamine, norbornanediamine, octamethylenediamine, 4,8-diaminotricyclo[5.2.1.0]decane, trimethylhexamethylenediamine, and piperazine, and also arylmonoamines such as aniline, cycloaliphatic monoamines such as cyclohexylamine, and alkylmonoamines such as 1-propylamine.

If primary amines are a constituent of the epoxy-resin compositions of the invention, they can contribute to thickening thereof, or to the thickening of the corresponding fiber-matrix-semifinished-product composition (to give the semisolid fiber-matrix semifinished product, for example to give the semisolid SMC). A decisive factor here is that the total amount of primary aliphatic amine groups does not exceed a proportion of 0.09 mol per mole of epoxy groups of the entire composition, in order that the available operating time or available processing time achieved for the semisolid fiber-matrix semifinished product is adequate. In one particular embodiment of the invention, the amount of primary amines comprised in the epoxy-resin composition or the fiber-matrix-semifinished-product composition is such that the total amount of primary aliphatic amine groups is in the range from 0.01 to 0.05 mol per mole of epoxy groups of the entire composition. In another particular embodiment of the invention, the epoxy-resin composition is in essence free from primary amines in addition to the aminoalkylimidazole compounds (B1).

The optional constituents of the hardener component (B) involve by way of example further catalysts and/or accelerators for the curing reaction in addition to the diazabicycloalkylen compound (B3) and the aminoalkylimidazole compounds (B1). Examples of these catalysts and/or accelerators are urea derivatives (urones) such as 1,1-dimethyl-3-phenylurea (fenuron) or 3,3'-(4-methyl-1,3-phenylene)bis(1,1-dimethylurea) (Dyhard® UR500), and tertiary amines such as triethanolamine, benzyldimethylamine, 2,4,6-tris(dimethylaminomethyl)phenol (DMP30), or tetramethylguanidine (TMG).

In one particular embodiment of the invention, the epoxy-resin composition is in essence free from vinyl monomers, in particular from styrene.

In one particular embodiment of the invention, the epoxy-resin composition is in essence free from solvents. For the purposes of this invention, solvents are compounds which are liquid at room temperature and which are suitable for dissolving or for diluting or for suspending one or more constituents of the epoxy-resin composition of the invention, without reacting chemically with the constituents of the epoxy-resin composition. Solvents in this sense are by way of example water, diethyl ether, isopropyl alcohol, methyl ethyl ketone, ethyl acetate, and also hydrocarbons such as toluene or xylene, and chlorinated hydrocarbons such as dichloromethane or tetrachloromethane. A particular solvent in this sense is water.

In one particular embodiment of the invention, the epoxy-resin composition is in essence free from carboxylic acids and from carboxylic anhydrides.

In one particular embodiment of the invention, the epoxy-resin composition is in essence free from non-epoxy-based curable resins and from non-epoxy-based thermoplastic materials. Particular non-epoxy-based curable resins and thermoplastic materials are phenolic resins, polyether sulfones, polyvinylformaldehyde resins, and polyamides.

The expression "in essence free" means for the purposes of this invention a proportion ≤ 1% by weight, preferably ≤ 0.1% by weight, particularly preferably "below the detection threshold", based on the corresponding entire composition.

For the purposes of the present invention, short reinforcement fibers (C) are short fiber sections with an average length of from 0.3 to 5.0 cm. For the use in SMC, it is preferable to use fiber sections with an average length of from 1.2 to 5.0 cm, and for the use in BMC it is preferable to use fiber sections with an average length of from 0.3 to 2.5 cm. The fibers are usually made of glass or mineral wool, or else nylon fibers, aramid fibers, or carbon fibers can be used as reinforcement fibers of the invention. It is preferable that the reinforcement fibers (C) involve glass fiber sections and/or carbon fiber sections, and in particular the short reinforcement fibers (C) involve glass fiber sections. It is preferable that the average length of the short reinforcement fibers (C) has a standard deviation of at most 10%, preferably at most 5%, in particular at most 2%, of the average length.

The fiber-matrix semifinished-product composition of the invention usually comprises a proportion of from 10 to 75% by weight, preferably from 25 to 65% by weight, of reinforcement fibers (C), based on the entire fiber-matrix-semifinished-product composition.

The epoxy-resin composition of the invention can also comprise other additions, for example fillers, diluents, pigments, dyes, release agents, tougheners, flow agents, wetting agents, anti-foamers, or flame-retardant agents. It is usual to add a functional amount of these additions, i.e. by way of example in the case of a pigment, an amount which leads to the desired color of the composition.

Examples of suitable fillers are aluminum oxide, aluminum hydroxide, silicates, modified montmorillonite, calcium carbonate, or alumina. The amount usually used of fillers is from 0 to 200% by weight, based on the entire curable composition without filler.

For the production of SMC or BMC, the constituents of the fiber-matrix-semifinished-product composition are brought into contact with one another and mixed. In the case of SMC production, said mixture is applied in the manner of a sheet generally between two foils. After mixing of the constituents, thickening of the fiber-matrix-semifinished-product composition occurs at room temperature. This process is characterized by an increase in the glass transition temperature (Tg) and the viscosity of the material. The thickening of the material produces the semisolid fiber-matrix semifinished product (semisolid SMC or BMC).

It is important here that this semifinished product has the longest possible available handling time at room temperature, starting with the mixing of the constituents, i.e. the longest possible time in which it has a certain flexibility. In particular, in the case of semisolid SMC, where this is usually stored in the form of rolls, it is important that the material can be taken from the roll (ease of unrolling) and converted (ease of fabrication) to the form (e.g. flat mats or sheets) needed for further processing (curing). If the material loses its flexibility during the course of the thickening process, handling becomes more difficult, but it can generally still be processed (compression process in a compression mold). For the purposes of the present invention, it has been found that adequate ease of handling or ease of unrolling is ensured for a period during which the corresponding epoxy-resin composition (without reinforcement fibers) by way of example does not exceed a glass transition temperature of 5°C (available operating time). For the epoxy-resin composition of the fiber-matrix-semifinished-product composition of the invention, this condition is satisfied at room temperature for a period of at least 3 days, preferably of at least 5 days.

At the same time, it is important that the material progresses as rapidly as possible to the condition in which it can be further processed (hardened). The processing generally takes place via pressing of the material in a compression mold under elevated pressure (for example 100 bar) and at elevated temperature (for example 150°C). Under these conditions, the viscosity of the semisolid fiber-matrix semifinished product initially falls, in such a way that the material can fill the compression mold uniformly and completely. At the same time, under these conditions, the latent hardener brings about the hardening of the material and thus causes its viscosity to rise again rapidly. It is important here that the viscosity of the material does not fall too greatly during said processing, since otherwise separation of resin matrix and reinforcement fibers, and escape of the material from the compression mold, can occur. For the purposes of the present invention, it has been found that processability (compression process on the semisolid fiber-matrix semifinished product) that is adequate in this respect is ensured from the point in time from which the viscosity of a specimen (amounting to about 2 g) of the corresponding epoxy-resin composition (without reinforcement fibers) rapidly heated (0.5°C/sec) to 140°C is then never less than 0.5 Pa*sec, measured by way of example in a rheometer (for example Anton Paar MCR 301, FW3.30 viscometer (plate-on-plate configuration; diameter 25 mm; gap 1000 µm, oscillation, shear rate 10 Hz)). The time required by the composition up to said point in time at a certain temperature, calculated starting from the mixing of the constituents, is the maturing time. The maturing time for the epoxy-resin composition of the fiber-matrix-semifinished-product composition of the invention, at room temperature, is at most 14 days, preferably at most 10 days, particularly preferably at most 8 days, in particular at most 6 days.

The available operating time for an epoxy-resin composition is ideally longer than its maturing time, thus permitting the compression process for the semisolid fiber-matrix semifinished product, in particular for the semisolid SMC, to follow its fabrication directly.

It is preferable that the epoxy-resin compositions also exhibit the longest possible time available for processing. This time available begins with the conclusion of the maturing time and ends when the viscosity no longer falls sufficiently during processing (compression process) to ensure complete and uniform filling of the compression mold. For the purposes of the present invention, it has been found that processability that is adequate in this respect (compression process on the semi-solid, pre-cured fiber-matrix semifinished) product) is ensured as long as by way of example the viscosity of a specimen (amounting to about 2 g) of the appropriate epoxy-resin composition (without reinforcement fibers) rapidly heated (0.5°C/sec) to 140°C remains below 1000 Pa*sec, measured in a rheometer (for example Anton Paar MCR 301, FW3.30 viscometer (plate-on-plate configuration; diameter 25 mm; gap 1000 µm, oscillation, shear rate 10 Hz)).

Alternatively, the time molding window, which begins when the viscosity of the material (fiber-matrix-semifinished-product composition) remains high enough during the compression process to ensure no or only marginal escape of the material from the compression mold, and which ends when the viscosity no longer falls sufficiently during the compression process to ensure complete and uniform filling of the compression mold, can be determined by measuring the resin squeeze out of the material by means of a press device as described in EN ISO 12114 II. Preferably, a molding window is realized which begins as early as possible and which lasts as long as possible. Preferably the molding window for the fiber-matrix-semifinished-product composition of the invention begins, at room temperature, at most 14 days, preferably at most 10 days, particularly preferably at most 8 days, in particular at most 6 days starting from the mixing of the constituents. Preferably the molding window for the fiber-matrix-semifinished-product composition of the invention lasts, at room temperature, lasts at least 3 days, preferably at least 5 days.

The glass transition temperature can be determined by means of differential calorimetry (DSC) in accordance with the standard DIN 53765.

The epoxy-resin compositions of the present invention exhibit a particular rapid hardening rate, and therefore allow a high throughput for the manufacturing of cured articles.

The gel time provides, in accordance with DIN 16 945 information about the interval between addition of the hardener to the reaction mixture and the conversion of the reactive resin composition from the liquid state to the gel state. The temperature plays an important part here, and the gel time is therefore always determined for a predetermined temperature. By using dynamic-mechanical methods, in particular rotary viscometry, it is also possible to study small amounts of specimens quasi-isothermally and to record the entire viscosity curve or stiffness curve for these. In accordance with the standard ASTM D4473, the point of intersection of the storage modulus G' and the loss modulus G", at which the damping tan δ has the value 1 is the gel point, and the time taken, from addition of the hardener to the reaction mixture, to reach the gel point is the gel time. The time taken, from addition of the hardener to the reaction mixture, to reach the maximum G" is the curing time. The gel time and the curing time thus determined can be considered to be a measure of the hardening rate.

The present invention also provides a process for producing a fiber-matrix-semifinished-product composition of the invention (SMC composition or BMC composition), in particular an SMC composition, comprising the mixing of the constituents of the fiber-matrix-semifinished-product composition of the invention at a temperature at which the epoxy resin (A1) used does not react significantly with the latent hardener (B2) used, preferably at a temperature of from 10 to 50°C. A reaction that is not significant between the latent hardener and the epoxy resin is a reaction which within 24 h under ambient conditions leads at most to doubling of the viscosity of the epoxy-resin composition (for example no, or less than two-fold, increase of the viscosity at room temperature (25°C) within 24 h).

The present invention also provides a process for producing matured semisolid fiber-matrix semifinished product (matured semisolid SMC or BMC) comprising the provision of a fiber-matrix-semifinished-product composition of the invention (SMC composition or BMC composition) and the maturing of the composition at a temperature at which, for at least the duration of the maturing time, the epoxy resin (A1) used does not react significantly with the latent hardener (B2) used, preferably at a temperature of from 10 to 50°C. During the maturing of the fiber-matrix-semifinished-product composition to give the semisolid fiber-matrix semifinished product, the aminoalkylimidazole compound (B1) brings about thickening of the composition. A reaction that is not significant between the latent hardener and the epoxy resin is a reaction which within 24 h under ambient conditions leads at most to doubling of the viscosity of the epoxy-resin composition (for example no, or less than two-fold, increase of the viscosity at room temperature (25°C) within 24 h). The maturing time is the period that starts with the provision of the fiber-matrix-semifinished-product composition and ends at the point in time from which the viscosity of a specimen of 2 g of the corresponding epoxy-resin composition rapidly heated at 0.5°C/sec to 140°C is then never less than 1 Pa*sec (measured by way of example in a rheometer (for example Anton Paar MCR 301, FW3.30 viscometer (plate-on-plate configuration; diameter 25 mm; gap 1000 µm, oscillation, shear rate 10 Hz)).

The present invention in particular provides a process for producing matured semisolid SMC comprising the provision of a SMC composition of the invention, the molding of layers from said composition, and the maturing of the composition at a temperature at which, for at least the duration of the maturing time, the epoxy resin (A1) used does not react significantly with the latent hardener (B2) used, preferably at a temperature of from 10 to 50°C. A reaction that is not significant between the latent hardener and the epoxy resin is a reaction which within 24 h under ambient conditions leads at most to doubling of the viscosity of the epoxy-resin composition (for example no, or less than two-fold, increase of the viscosity at room temperature (25°C) within 24 h). The maturing time is the period that starts with the provision of the fiber-matrix-semifinished-product composition and ends at the point in time from which the viscosity of a specimen of 2 g of the corresponding epoxy-resin composition rapidly heated at 0.5°C/sec to 140°C is then never less than 1 Pa*sec (measured by way of example in a rheometer (for example Anton Paar MCR 301, FW3.30 viscometer (plate-on-plate configuration; diameter 25 mm; gap 1000 µm, oscillation, shear rate 10 Hz)). The epoxy-resin composition (matrix component) is usually mixed together with the short reinforcement fibers (C) between two foils (generally removable foils by way of example made of polyethylene or polyamide) and molded to give an SMC composition in the form of a layer. Squeeze rollers are usually used to remove air bubbles. The viscosity of the epoxy-resin composition (matrix component) at the start of the process of mixing with the short reinforcement fibers (C) is generally in the range from 5 to 50 Pa*sec, in order to improve the impregnation of the reinforcement fibers by the epoxy-resin composition (matrix component). It is preferable that shortly after production of the SMC composition in the form of a layer it has already achieved a viscosity sufficient to minimize any separation of the short reinforcement fibers (C) from the resin matrix (epoxy-resin composition).

The present invention also provides the matured semisolid fiber-matrix semifinished product produced, or which can be produced, via the provision of a fiber-matrix-semifinished-product composition of the invention (SMC composition or BMC composition) and the maturing of the composition at a temperature at which, for at least the duration of the maturing time, the epoxy resin (A1) used does not react significantly with the latent hardener (B2) used, preferably at a temperature of from 10 to 50°C. A reaction that is not significant between the latent hardener and the epoxy resin is a reaction which within 24 h under ambient conditions leads at most to doubling of the viscosity of the epoxy-resin composition (for example no, or less than two-fold, increase of the viscosity at room temperature (25°C) within 24 h). The maturing time is the period that starts with the provision of the fiber-matrix-semifinished-product composition and ends at the point in time from which the viscosity of a specimen of 2 g of the corresponding epoxy-resin composition rapidly heated at 0.5°C/sec to 140°C is then never less than 1 Pa*sec (measured by way of example in a rheometer (for example Anton Paar MCR 301, FW3.30 viscometer (plate-on-plate configuration; diameter 25 mm; gap 1000 µm, oscillation, shear rate 10 Hz)).

The present invention in particular also provides the matured semisolid SMC produced, or which can be produced, via the provision of an SMC composition of the invention, the molding of layers from said composition, and the maturing of the composition at a temperature at which, for at least the duration of the maturing time, the epoxy resin (A1) used does not react significantly with the latent hardener (B2) used, preferably at a temperature of from 10 to 50°C, where it is preferable that the epoxy resin composition (matrix component) is mixed together with the short reinforcement fibers (C) between two foils (generally removable foils, by way of example made of polyethylene or polyamide) and is molded to give an SMC composition in the form of a layer, and where the viscosity of the epoxy-resin composition (matrix component) at the start of the process of mixing with the short reinforcement fibers (C) is preferably in the range from 5 to 50 Pa*sec. A reaction that is not significant between the latent hardener and the epoxy resin is a reaction which within 24 h under ambient conditions leads at most to doubling of the viscosity of the epoxy-resin composition (for example no, or less than two-fold, increase of the viscosity at room temperature (25°C) within 24 h). The maturing time is the period that starts with the provision of the fiber-matrix-semifinished-product composition and ends at the point in time from which the viscosity of a specimen of 2 g of the corresponding epoxy-resin composition rapidly heated at 0.5°C/sec to 140°C is then never less than 1 Pa*sec (measured by way of example in a rheometer (for example Anton Paar MCR 301, FW3.30 viscometer (plate-on-plate configuration; diameter 25 mm; gap 1000 µm, oscillation, shear rate 10 Hz)).

The present invention also provides cured fiber-matrix semifinished product (cured SMC or BMC), in particular cured SMC, produced, or which can be produced, via curing of the semisolid fiber-matrix semifinished product or of the semisolid SMC. The curing is advantageously carried out at temperatures in the range from 90 to 200°C, preferably in the range from 110 to 180°C, in particular in the range from 130 to 170°C. The curing time depends on the latent hardener (B2) used and on the curing temperature selected. It should be selected in such a way that at least 95%, preferably at least 98%, of the epoxy groups remaining in the semisolid fiber-matrix semifinished product after the thickening process are reacted. The curing time is usually in the range from 1 to 120 min, preferably from 2 to 60 min, particularly preferably from 2 to 15 min, in particular from 2 to 5 min. The curing usually takes place via compression in a mold at a pressure of from 5 to 200 bar, in particular from 25 to 150 bar.

The present invention also provides the use of an epoxy-resin composition comprising a resin component (A) comprising at least one epoxy resin (A1) and a hardener component (B) comprising at least one aminoalkylimidazole compound (B1), at least one latent hardener (B2), and at least one diazabicycloalkylen compound (B3), as matrix component for producing semisolid SMC or for producing cured SMC, where the amount of the aminoalkylimidazole compounds (B1) used is in the range from 0.007 to 0.025 mol per mole of epoxy groups of the entire composition, and where the total amount of primary aliphatic amine groups optionally comprised does not exceed a proportion of 0.09 mol per mole of epoxy groups of the entire composition. The present invention also provides the use of SMC composition of the invention for producing semisolid SMC or for producing cured SMC.

### Examples

### Example 1

### Production of epoxy-resin compositions E1 to E5 (of the invention) and C1 to C4 (for comparison)

In each case, 100 g of DEGBA (Epilox A 18-00, Leuna Harze GmbH, EEW = 180 g/eq) were mixed together with 6.5 g of DICY (Dyhard 100 SH, AlzChem, Mw 84 g/mol) and 1 g (0.014 mol per mole of epoxy group in the entire epoxy-resin composition) of API (Lupragen® API, BASF SE) and a curing accelerator in a mixing apparatus at room temperature (comparison example C1 is without curing accelerator). Table 1 collates the constituents including the various used curing accelerators, and also the amounts of these (in g per 100 g of the epoxy resin), for the hardener components of the compositions E1 to E5 and C1 to C4.

**Table 1:**

| Composition of the hardener component for epoxy-resin compositions C1 to C4 and E1 to E5 | | | | | | | |
|---|---|---|---|---|---|---|---|
| | DICY | API | Dyhard® UR500 | TMG | DMP30 | DBU | DBN |
| C1 | 6,5 | 1 | | | | | |
| C2 | 6,5 | 1 | 1 | | | | |
| C3 | 6,5 | 1 | | 1 | | | |
| C4 | 6,5 | 1 | | | 1 | | |
| E1 | 6,5 | 1 | | | | 1 | |
| E2 | 6,5 | 1 | | | | 2 | |
| E3 | 6,5 | 1 | | | | | 0,5 |
| E4 | 6,5 | 1 | | | | | 0,75 |
| E5 | 6,5 | 1 | | | | | 1 |

### Example 2:

### Measurement of glass transition temperature and of viscosity for the epoxy-resin compositions E1 to E3, E5 and C1 to C4 over the course of time

Differential scanning calorimetry (DSC) was used in accordance with the standard DIN 53765 to measure the glass transition temperature for the epoxy-resin compositions E1 to E11 and C1 to C4 immediately after the mixing of the constituents of the respective epoxy-resin compositions, and then in each case once daily during the storage of the corresponding epoxy-resin compositions at 25°C. Table 2 collates the glass transition temperatures thus determined as a function of the storage time for the respective epoxy-resin compositions E1 to E3, E5 and C1 to C4.

Immediately after the mixing of the constituents for the respective epoxy-resin compositions E1 to E3, E5 and C1 to C4, and then in each case once daily during storage at 25°C, the minimum of the viscosity curve resulting from rapid heating of the specimen was determined. To this end, in each case a specimen (about 2 g) of the respective epoxy-resin composition was taken and heated at 0.5°C/sec from the storage temperature (25°C) to the hardening temperature (140°C), while viscosity was measured as a function of time. The viscosity was measured by using a rheometer (Anton Paar MCR 301, FW3.30 viscometer (plate-on-plate configuration; diameter 25 mm; gap 1000 µm, oscillation, shear rate 10 Hz)). The heating of the specimen initially reduces the viscosity, but then it rises rapidly over the further course of time because of the onset of latent curing. Table 3 collates the minimum of the viscosity curve here as a function of storage time for the respective epoxy-resin compositions E1 to E3, E5 and C1 to C4.

**Table 2:**

| Glass transition temperature (in °C) over the course of time (from 0 to at most 7 days) for the epoxy-resin compositions E1 to E3, E5 and C1 to C4 | | | | | | | | |
|---|---|---|---|---|---|---|---|---|
| | Storage time in days at 25°C | | | | | | | |
| | 0 | 1 | 2 | 3 | 4 | 5 | 6 | 7 |
| C1 | -16 | -14 | -11 | -9 | -7 | -2 | 3 | 7 |
| C2 | -16 | -13 | -11 | -7 | -5 | -3 | 1 | 12 |
| C3 | -17 | -11 | -4 | 10 | 17 | | | |
| C4 | -16 | -11 | -7 | 6 | 12 | | | |
| E1 | -17 | -12 | -8 | -6 | -5 | 0 | 10 | 12 |
| E2 | -17 | -10 | -3 | -2 | 0 | 4 | 15 | |
| E3 | -16 | -11 | -8 | -5 | 0 | 9 | 18 | |
| E5 | -17 | -7 | 2 | 5 | 6 | 18 | | |

**Table 3:**

| Viscosity minimum (in mPa*sec) over the course of time from 0 to at most 5 days (until a viscosity minimum of at least 500 mPa*sec is reached) for the epoxy-resin compositions E1 to E3, E5 and C1 to C4 - at the time when a viscosity minimum of at least 500 mPa*sec is reached, a sample is sufficiently matured to allow for curing under SMC molding conditions at e.g. 140°C | | | | | | |
|---|---|---|---|---|---|---|
| | Storage time in days at 25°C | | | | | |
| | 0 | 1 | 2 | 3 | 4 | 5 |
| C1 | 15 | 25 | 59 | 113 | 245 | >500 |
| C2 | 16 | 28 | 51 | 85 | 282 | >500 |
| C3 | 17 | 50 | 167 | 451 | >500 | |
| C4 | 28 | 81 | 246 | >500 | | |
| E1 | 24 | 34 | 86 | 119 | 238 | >500 |
| E2 | 34 | 94 | 229 | >500 | | |
| E3 | 22 | 53 | 172 | 320 | >500 | |
| E5 | 61 | 75 | 179 | >500 | | |

### Example 3:

### Measurement of glass transition temperature for the epoxy-resin compositions E1 to E3, E5 and C1 to C4

Immediately after the mixing of the constituents for the respective epoxy-resin compositions E1 to E5 and C1 to C4, and then in each case the glass transition temperature (Tg) was measured by DSC in accordance with ASTM D3418, and the temperature profile used here was as follows: 3 min -50°C → -5K/min 250°C → 10 min 250°C → 20K/min 0°C → 20K/min 250°C. In each case, 2 procedures were carried out, and Tg here was in each case determined in the 2nd procedure. Table 4 collates the results.

**Table 4:**

| Glass transition temperature (in °C) for the epoxy-resin compositions E1 to E3, E5 and C1 to C4 | |
|---|---|
| | Glass transition temperature (°C) |
| C1 | 148 |
| C2 | 143 |
| C3 | 144 |
| C4 | 145 |
| E1 | 150 |
| E2 | 145 |
| E3 | 145 |
| E5 | 148 |

The addition of the diazabicycloalkylen accelerator according to the invention does not impair the glass transition temperature of the cured epoxy resin.

### Example 4:

### Measurement of gel time and cure time for the epoxy-resin compositions E1 to E5 and C1 to C4

Immediately after the mixing of the constituents for the respective epoxy-resin compositions E1 to E5 and C1 to C4, and then in each case the loss modulus (G") and the storage modulus (G') was measured at a hardening temperature of 140°C over time in accordance with standard ASTM D4473 by using a rheometer (Anton Paar MCR 301, FW3.30 viscometer (plate-on-plate configuration; diameter 25 mm; gap 1000 µm, oscillation, shear rate 10 Hz)). The point of intersection of G" and G' provides the gel time and the time taken to reach the maximum G" provides the curing time. Table 5 collates the results.

**Table 5:**

| Gel time (in min) and curing time (in min) at 140°C for the epoxy-resin compositions E1 to E5 and C1 to C4 | | |
|---|---|---|
| | Gel time (min) | Curing time (min) |
| C1 | 3.5 | 6.9 |
| C2 | 2.9 | 6.1 |
| C3 | 2.6 | 5.6 |
| C4 | 2.3 | 5.1 |
| E1 | 1.5 | 4.1 |
| E2 | 1.0 | 2.8 |
| E3 | 1.8 | 3.6 |
| E4 | 2.0 | 3.8 |
| E5 | 0.8 | 2.8 |

The epoxy-compositions of the present invention which comprise diazabicycloalkylen compounds as curing accelerators show a significantly reduced gel time and curing time, compared to epoxy-resin compositions with other curing accelerators such as Dyhard® UR500, TMG or DMP30. At the same time, the handling time and the maturing time and the glass transitions temperature of the cured epoxy resin are not impaired for the epoxy-compositions of the present invention compared to the epoxy-resin compositions with other curing accelerators.

### Example 5:

### Measurement of the resin squeeze out of fiber-matrix semifinished product based on the epoxy-resin composition C1, C3 and E1

SMCs were prepared on a SMC pilot line based on the epoxy-resin compositions C1, C3 and E1 and having a glass fiber content of 55% b.w. (2.5 cm fiber length). The SMCs were stored at 23°C. The resin squeeze out (measured as weight loss) was determined over the course of time by means of a press device as described in EN ISO 12114 II. The following molding conditions have been applied: a mold coverage of 66%, a molding time of 5 min, a temperature of 140 to 145°C and a pressure (in mold) of 66 bar. The start of molding window was defined by a resin loss of 5%, and the end of the molding window was defined by a resin loss of 0% and incomplete flow of SMC. The length of the molding window in days is presented in Table 6.

**Table 6:**

| Molding window in days for SMCs based on the epoxy-resin compositions C1, C3 and E1 | |
|---|---|
| | Length of molding window (days) |
| C1 | 6 |
| C3 | 2 |
| E1 | 6 |

The length of the molding window of the SMC according to the invention (E1) using the curing accelerator DBU is comparable to that of the comparison example (C1, without curing accelerator). In contrast, curing accelerator TMG (as used in comparison example C3) substantially reduces the applicable molding time.

## Claims

1. An epoxy-resin composition comprising
a resin component (A) which comprises at least one epoxy resin (A1), and
a hardener component (B) which comprises at least one aminoalkylimidazole compound
(B1), at least one latent hardener (B2) and at least one diazabicycloalkylen compound of the general formula I (B3) 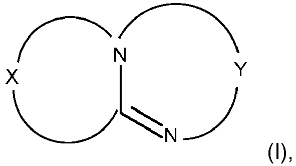 where X and Y are respectively mutually independently an alkylen group, preferably having from 3 to 5 carbon atoms,
where the amount of the aminoalkylimidazole compounds (B1) used is in the range from 0.007 to 0.025 mol per mole of epoxy groups of the entire composition, and
where the total amount of primary aliphatic amine groups of the aminoalkylimidazole compounds (B1) and any further primary amines optionally comprised does not exceed a proportion of 0.09 mol per mole of epoxy groups of the entire composition.

2. The epoxy-resin composition according to claim 1, where the epoxy resin (A1) is a diglycidyl ether of monomeric or oligomeric diol, where the diol is one selected from the group consisting of bisphenol A or bisphenol F, or hydrogenated bisphenol A or bisphenol F.

3. The epoxy-resin composition according to claim 1 or 2, where the aminoalkylimidazole compound (B1) is an aminoalkylimidazole compound of the general formula II 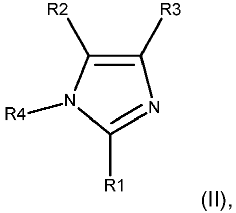 where
R1 is a hydrogen atom, an alkyl group, an aryl group, or an arylalkyl group,
R2 and R3 are respectively mutually independently a hydrogen atom or an alkyl group, and
R4 is an aminoalkyl group.

4. The epoxy-resin composition according to claim 3, where
R1 is a hydrogen atom, an alkyl group having from 1 to 4 carbon atoms, an aryl group having from 3 to 7 carbon atoms, or an arylalkyl group having from 4 to 10 carbon atoms,
R2 and R3 are respectively mutually independently a hydrogen atom or an alkyl group having from 1 to 4 carbon atoms, and
R4 is an aminoalkyl group having from 2 to 4 carbon atoms.

5. The epoxy-resin composition according to any of claims 1 to 4, where the latent hardener (B2) is dicyandiamide.

6. The epoxy-resin composition according to any of claims 1 to 6, where the amount of the diazabicycloalkylen compounds of the general formula I (B3) used is in the range from 0.5 to 3.0 % by weight based on the amount of epoxy resin (A1).

7. The epoxy-resin composition according to any of claims 1 to 6, where the diazabicycloalkylen compound of the general formula I (B3) is 7,8-diazabicyclo[5,4,0]undec-7-ene (DBU) or 1,5-diazabicyclo[4,3,0]non-5-ene or a mixture thereof.

8. The epoxy-resin composition according to any of claims 1 to 7, where the epoxy-resin composition comprises, as further constituent of the resin component (A), alongside the epoxy resin (A1), a reactive diluent (A2).

9. The epoxy-resin composition according to any of claims 1 to 8, where the epoxy-resin composition comprises, as further constituent short reinforcement fibers (C) with an average length of from 0.3 to 5.0 cm suspended in the epoxy-resin composition.

10. The epoxy-resin composition according to claim 9, where the short reinforcement fibers (C) have an average length of from 1.2 to 5.0 cm.

11. A process for producing an epoxy-resin composition, comprising the mixing of the constituents of the epoxy-resin composition according to any of claims 1 to 10 at a temperature at which the epoxy resin (A1) used does not react significantly with the latent hardener (B2) used.

12. A process for producing matured semisolid fiber-matrix semifinished product comprising the provision of an epoxy-resin composition according to claim 9 or 10 and the maturing of the composition at a temperature at which, for at least the duration of the maturing time, the epoxy resin (A1) used does not react significantly with the latent hardener (B2) used, where the maturing time is the period that starts with the provision of the epoxy-resin composition according to claim 9 or 10 and ends at the point in time from which the viscosity of a specimen of 2 g of the corresponding epoxy-resin composition rapidly heated at 0.5°C/sec to 140°C is then never less than 0.5 Pa*sec.

13. A matured semisolid fiber-matrix semifinished product which can be produced by the process according to claim 12.

14. A cured fiber-matrix semifinished product which can be produced via curing of the semi-solid fiber-matrix semifinished product according to claim 13.

15. Use of an epoxy-resin composition according to any of claims 1 to 8 as matrix component for producing semisolid sheet molding compounds or for producing cured sheet molding compounds.

## Patentansprüche

1. Eine Epoxidharz-Zusammensetzung, die Folgendes umfasst:
eine Harzkomponente (A), welche mindestens ein Epoxidharz (A1) umfasst, und eine Härterkomponente (B), welche mindestens eine Aminoalkylimidazolverbindung (B1), mindestens einen latenten Härter (B2) und mindestens eine Diazabicycloalkylenverbindung der allgemeinen Formel I (B3) umfasst, 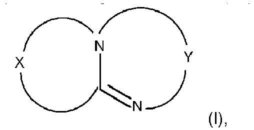 worin X und Y jeweils beide unabhängig eine Alkylengruppe sind, vorzugsweise mit 3 bis 5 Kohlenstoffatomen, worin die Menge der verwendeten Aminoalkylimidazolverbindungen (B1) im Bereich von 0,007 bis 0,025 Mol pro Mol Epoxygruppen der Gesamtzusammensetzung liegt, und worin die Gesamtmenge an primären aliphatischen Amingruppen der Aminoalkylimidazolverbindungen (B1) und jeglicher weiterer wahlweise enthaltener primärer Amine einen Anteil von 0,09 Mol pro Mol von Epoxygruppen der Gesamtzusammensetzung nicht überschreitet.

2. Die Epoxidharz-Zusammensetzung gemäß Anspruch 1, worin das Epoxidharz (A1) ein Diglycidylether von monomerem oder oligomerem Diol ist, worin das Diol gewählt ist aus der Gruppe bestehend aus Bisphenol A oder Bisphenol F, oder hydriertem Bisphenol A oder Bisphenol F.

3. Die Epoxidharz-Zusammensetzung gemäß Anspruch 1 oder 2, worin die Aminoalkylimidazolverbindung (B1) eine Aminoalkylimidazolverbindung der allgemeinen Formel II ist, 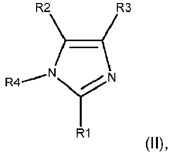 worin
R1 ein Wasserstoffatom, eine Alkylgruppe, eine Arylgruppe, oder eine Arylalkylgruppe ist, R2 und R3 sind jeweils beide unabhängig ein Wasserstoffatom oder eine Alkylgruppe, und R4 ist eine Aminoalkylgruppe.

4. Die Epoxidharz-Zusammensetzung gemäß Anspruch 3, worin R1 ein Wasserstoffatom, eine Alkylgruppe mit 1 bis 4 Kohlenstoffatomen, eine Arylgruppe mit 3 bis 7 Kohlenstoffatomen, oder eine Arylalkylgruppe mit 4 bis 10 Kohlenstoffatomen ist,
R2 und R3 sind jeweils beide unabhängig ein Wasserstoffatom oder eine Alkylgruppe mit 1 bis 4 Kohlenstoffatomen, und R4 ist eine Aminoalkylgruppe mit 2 bis 4 Kohlenstoffatomen.

5. Die Epoxidharz-Zusammensetzung gemäß irgendeinem der Ansprüche 1-4, worin der latente Härter (B2) Dicyandiamid ist.

6. Die Epoxidharz-Zusammensetzung gemäß irgendeinem der Ansprüche 1-6, worin die Menge der verwendeten Diazabicycloalkylenverbindungen der allgemeinen Formel I (B3) im Bereich von 0,5 bis 3,0 Gewichts% basierend auf der Menge des Epoxidharzes (A1) liegt.

7. Die Epoxidharz-Zusammensetzung gemäß irgendeinem der Ansprüche 1-6, worin die Diazabicycloalkylenverbindung der allgemeinen Formel I (B3) 7,8-Diazabicyclo[5,4,0]undec-7-en (DBU) oder 1,5-Diazabicyclo[4,3,0]non-5-en oder eine Mischung daraus ist.

8. Die Epoxidharz-Zusammensetzung gemäß irgendeinem der Ansprüche 1-7, worin die Epoxidharz-Zusammensetzung, als weiteren Bestandteil der Harzkomponente (A), neben dem Epoxidharz (A1), ein reaktives Verdünnungsmittel (A2) umfasst.

9. Die Epoxidharz-Zusammensetzung gemäß irgendeinem der Ansprüche 1-8, worin die Epoxidharz-Zusammensetzung, als weiteren Bestandteil, kurze Verstärkungsfasern (C) mit einer durchschnittlichen Länge von 0,3 bis 5,0 cm suspendiert in der Epoxidharz-Zusammensetzung umfasst.

10. Die Epoxidharz-Zusammensetzung gemäß Anspruch 9, worin die kurzen Verstärkungsfasern (C) eine durchschnittliche Länge von 1,2 bis 5,0 cm haben.

11. Ein Verfahren zur Herstellung einer Epoxidharz-Zusammensetzung, umfassend das Mischen der Bestandteile der Epoxidharz-Zusammensetzung gemäß irgendeinem der Ansprüche 1 bis 10 bei einer Temperatur, bei welcher das verwendete Epoxidharz (A1) nicht signifikant mit dem verwendeten latenten Härter (B2) reagiert.

12. Ein Verfahren zur Herstellung eines gereiften halbfesten Fasermatrix Halbfertigprodukts umfassend das Bereitstellen einer Epoxidharz-Zusammensetzung gemäß Anspruch 9 oder 10 und das Reifen der Zusammensetzung bei einer Temperatur, bei welcher, zumindest für die Dauer der Reifungszeit, das verwendete Epoxidharz (A1) nicht signifikant mit dem verwendeten latenten Härter (B2) reagiert, worin die Reifungszeit der Zeitraum ist, der mit der Bereitstellung der Epoxidharz-Zusammensetzung gemäß Anspruch 9 oder 10 beginnt, und an dem Zeitpunkt endet, von dem an die Viskosität eines Probestücks von 2 g der entsprechenden Epoxidharz-Zusammensetzung, das bei 0,5°C/Sek. schnell auf 140°C erhitzt wurde, dann nie geringer als 0,5 Pa*Sek. ist.

13. Ein gereiftes halbfestes Fasermatrix Halbfertigprodukt, welches durch das Verfahren gemäß Anspruch 12 hergestellt werden kann.

14. Ein ausgehärtetes Fasermatrix Halbfertigprodukt, welches über das Aushärten des halbfesten Fasermatrix Halbfertigprodukts gemäß Anspruch 13 hergestellt werden kann.

15. Verwendung einer Epoxidharz-Zusammensetzung gemäß irgendeinem der Ansprüche 1 bis 8 als Matrixkomponente zur Herstellung von halbfesten Harzmatten (Sheet Molding Compounds) oder zur Herstellung von ausgehärteten Harzmatten.

## Revendications

1. Composition de résine époxy comprenant
un composant résine (A) qui comprend au moins une résine époxy (A1), et
un composant durcisseur (B) qui comprend au moins un composé aminoalkylimidazole
(B1), au moins un durcisseur latent (B2) et au moins un composé diazabicycloalkylène (B3) de formule générale I 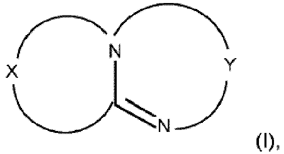 dans laquelle X et Y représentent chacun indépendamment l'un de l'autre un groupe alkylène, de préférence ayant de 3 à 5 atomes de carbone,
dans laquelle la quantité des composés aminoalkylimidazole (B1) utilisés se situe dans la plage de 0,007 à 0,025 mole par mole de groupes époxy de la composition totale, et
dans laquelle la quantité totale de groupes amino aliphatiques primaires des composés aminoalkylimidazole (B1) et de toutes autres amines primaires éventuellement comprises n'excède pas une proportion de 0,09 mole par mole de groupes époxy de la composition totale.

2. Composition de résine époxy selon la revendication 1, dans laquelle la résine époxy (A1) est un éther diglycidylique de diol monomère ou oligomère, où le diol est un diol choisi dans l'ensemble constitué par le bisphénol A et le bisphénol F, ou le bisphénol A et le bisphénol F hydrogénés.

3. Composition de résine époxy selon la revendication 1 ou 2, dans laquelle le composé aminoalkylimidazole (B1) est un composé aminoalkylimidazole de formule générale II 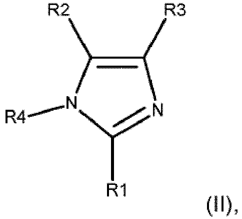 dans laquelle
R1 est un atome d'hydrogène, un groupe alkyle, un groupe aryle, ou un groupe arylalkyle,
R2 et R3 représentent chacun indépendamment l'un de l'autre un atome d'hydrogène ou un groupe alkyle, et
R4 est un groupe aminoalkyle.

4. Composition de résine époxy selon la revendication 3, dans laquelle
R1 est un atome d'hydrogène, un groupe alkyle ayant de 1 à 4 atomes de carbone, un groupe aryle ayant de 3 à 7 atomes de carbone, ou un groupe arylalkyle ayant de 4 à 10 atomes de carbone,
R2 et R3 représentent chacun indépendamment l'un de l'autre un atome d'hydrogène ou un groupe alkyle ayant de 1 à 4 atomes de carbone, et
R4 est un groupe aminoalkyle ayant de 2 à 4 atomes de carbone.

5. Composition de résine époxy selon l'une quelconque des revendications 1 à 4, dans laquelle le durcisseur latent (B2) est le dicyanodiamide.

6. Composition de résine époxy selon l'une quelconque des revendications 1 à 6, dans laquelle la quantité des composés diazabicycloalkylène (B3) de formule générale I utilisés se situe dans la plage de 0,5 à 3,0 % en poids par rapport à la quantité de résine époxy (A1).

7. Composition de résine époxy selon l'une quelconque des revendications 1 à 6, dans laquelle le composé diazabicycloalkylène (B3) de formule générale I est le 7,8-diazabicyclo[5,4,0]undéc-7-ène (DBU) ou le 1,5-diazabicyclo[4,3,0]non-5-ène ou un mélange de ceux-ci.

8. Composition de résine époxy selon l'une quelconque des revendications 1 à 7, dans laquelle la composition de résine époxy comprend, en tant que substituant supplémentaire du composant résine (A), conjointement avec la résine époxy (A1), un diluant réactif (A2).

9. Composition de résine époxy selon l'une quelconque des revendications 1 à 8, dans laquelle la composition de résine époxy comprend, en tant que constituant supplémentaire, des fibres courtes (C) de renfort ayant une longueur moyenne de 0,3 à 5,0 cm en suspension dans la composition de résine époxy.

10. Composition de résine époxy selon la revendication 9, dans laquelle les fibres courtes (C) de renfort ont une longueur moyenne de 1,2 à 5,0 cm.

11. Procédé pour produire une composition de résine époxy, comprenant le fait de mélanger les constituants de la composition de résine époxy selon l'une quelconque des revendications 1 à 10 à une température à laquelle la résine époxy (A1) utilisée ne réagit pas significativement avec le durcisseur latent (B2) utilisé.

12. Procédé pour produire un produit semi-fini matrice-fibres semi-solide arrivé à maturation, comprenant la fourniture d'une composition de résine époxy selon la revendication 9 ou 10 et la maturation de la composition à une température à laquelle, pendant au moins la durée du temps de maturation, la résine époxy (A1) utilisée ne réagit pas significativement avec le durcisseur latent (B2) utilisé, où le temps de maturation est la période qui commence avec la fourniture de la composition de résine époxy selon la revendication 9 ou 10 et s'achève au moment à partir duquel la viscosité d'un échantillon de 2 g de la composition de résine époxy correspondante chauffé rapidement à 0,5 °C/s jusqu'à 140 °C n'est ensuite jamais inférieure à 0,5 Pa*s.

13. Produit semi-fini matrice-fibres semi-solide arrivé à maturation, qui peut être produit par le procédé selon la revendication 12.

14. Produit semi-fini matrice-fibres durci, qui peut être produit par durcissement du produit semi-fini matrice-fibres semi-solide selon la revendication 13.

15. Utilisation d'une composition de résine époxy selon l'une quelconque des revendications 1 à 8 en tant que composant matrice pour la production de mélanges à mouler en feuille semi-solides ou pour la production de mélanges à mouler en feuille durcis.
